# EUROPEAN PATENT APPLICATION

(11) **EP 3 940 873 A2**
(43) Date of publication of application: **19.01.2022**
(21) Application number: 21182639.1
(22) Date of filing: 30.06.2021
(51) Int. Cl.: H01M 10/613, H01M 10/625, H01M 10/643, H01M 10/6554, H01M 50/213, H01M 50/249, H01M 50/284, H01M 50/293, H01M 50/507, H01M 50/55, H01M 50/569, H01M 50/262

(54) **BATTERY ASSEMBLY**

(30) Priority: 16.07.2020 GB 202010943
(71) Applicant: Rolls-Royce plc, London N1 9FX (GB)
(72) Inventor: Moore, Mathew, Derby, DE24 8BJ (GB); Holdsworth, Joseph, Derby, DE24 8BJ (GB); Bingham, Timothy, Derby, DE24 8BJ (GB)
(74) Representative: Rolls-Royce plc

(57) **Abstract**

Battery assemblies 40 and methods 60 of fabricating battery assemblies 40 are provided. One such battery assembly 40 comprises: an array of battery cells 50 comprising plural rows 41a-41e, each row comprising plural cells 50i-50xii, each cell 50 extending between opposed first and second ends 51, 52 and having first and second terminals 53, 54 both at the first end 51; a carrier frame 42 housing the array of cells 50 and comprising an array of apertures 43 corresponding to the array of cells 50, the first end 51 of each cell 50 is at least partially exposed by one of the apertures 43; and bus bars 44 attached to the carrier frame 41 between adjacent rows 41a-41e of the array such that each of the rows is adjacent two bus bars 44i, 44ii. For each of the plurality of rows 41a-41e, the first terminal 53 of each cell in the row is connected to one of the two adjacent bus bars 44i and the second terminal 54 of each cell in the row is connected to the other of the two adjacent bus bars 44ii. Portions 441 of the bus bars 44 and the apertures 43 are complementarily shaped.

## Description

### Technical Field

The present disclosure relates to battery assemblies and methods of fabricating battery assemblies, in particular battery assemblies that include integral bus bars.

### Background

Future aerospace applications including more electric, hybrid electric and purely electric aircraft will likely use high voltage battery packs made up of a number of series- and/or parallel- connected battery modules. These battery packs may, for example, be used to power one or more motors used to propel the aircraft and/or to provide power to one or more ancillary systems.

Each battery module will typically include a number of series- and parallel- connected battery cells, for example conventional cylindrical cells. Connecting the cells together, using for instance bus bars and cabling, invariably adds to the size, weight and manufacturing complexity of a module. Weight in particular is a concern for aerospace applications. Module designs that reduce weight and manufacturing complexity while meeting other important application requirements, particularly safety, are thus desirable.

### Summary of the Disclosure

Battery assemblies, battery modules and battery packs formed from one or more battery assemblies, as well as methods of fabricating battery assemblies are provided.

The terms "battery assembly", "battery module", "battery channel" and "battery pack" are used herein in a general sense to refer to electrical energy storage units that include various arrangements of electrically connected battery cells. The term "battery pack" is generally used to refer to an arrangement comprising one or more independent battery channels. The term "battery channel" is generally used to refer to an arrangement comprising one or more electrically connected battery modules. The term "battery module" is generally used to refer to an arrangement comprising one or more electrically connected battery assemblies. The term "battery assembly" is generally used to refer to any arrangement comprising one or more electrically connected battery cells. The battery cells may be cylindrical cells or another type of cell, for example pouch cells or prismatic cells.

According to a first aspect, there is a provided a battery assembly comprising: an array of battery cells comprising plural rows, each row comprising plural cells, each cell extending between opposed first and second ends and having first and second terminals both at the first end; a carrier frame housing the array of cells and comprising an array of apertures corresponding to the array of cells such that the first end of each cell is at least partially exposed by one of the apertures; and bus bars attached to the carrier frame between adjacent rows of the array such that each of the rows is adjacent two bus bars. For each of the plurality of rows, the first terminal of each cell in the row is connected to one of the two adjacent bus bars and the second terminal of each cell in the row is connected to the other of the two adjacent bus bars.

In an embodiment, portions of the bus bars and the apertures may be complementarily shaped (i.e. cooperatively shaped). The use of complementarily shaped bus bars and apertures may reduce connection distances between the bus bars and at least one of the first terminal and second terminal of the cells. Thus, utilising complementarily shaped bus bars and apertures may allow for an increase in the number of the connections and/or a reduction in the length of the connections between the bus bars and at least one of the first terminal and second terminal of the cells. It may also contribute to heat transfer and cooling of the bus bars.

In an embodiment, the bus bars are shaped so as to terminate at edges of the apertures, whereby the bus bars do not overhang the apertures and thus do not obstruct the exposed first ends of the battery cells. This may improve the ease with which connections can be made between the bus bars and the cell terminals. Furthermore, for battery cells configured to vent from their first ends, it may provide free space for the cells to vent, through the apertures. This may reduce the likelihood of cell sidewall rupture, which can lead to further damage of the battery assembly and the spread of thermal events.

In an embodiment, the complementarily shaped bus bars and apertures have non-linear shapes. The non-linear complementary shapes may be curved shapes or shapes having multiple straight sections forming angles with each other. In an embodiment, the bus bars have a serpentine shape.

In an embodiment, each of the bus bars that is provided between adjacent rows of cells has a first edge from which connections to the first terminals of the cells of one of the two adjacent rows of cells are made and a second edge from which connections to the second terminals of the cells of the other of the two adjacent rows of cells are made. The first and second edges may have different profiles. The second edges of the bus bars may be complementarily shaped with the adjacent apertures but the first edges may not be complementarily shaped with the adjacent apertures, or vice versa.

In an embodiment, the first terminal of each cell is connected to its adjacent bus bar by a plurality of connections and the second terminal of each cell is connected to its adjacent bus bar by a plurality of connections. The plurality of connections may be a plurality of wire bond connections and/or a plurality of ribbon bonds. Utilising a plurality of connections per terminal adds redundancy against connection failure. Utilising wire bonds may reduce the resistance of the connections and also permit a greater number of connections, which adds further redundancy.

In an embodiment, each connection between a bus bar and a first terminal of a cell is a connection to a central region of the cell, and each connection between a bus bar and a second terminal of a cell is a connection to a peripheral region of the cell. Such an arrangement conveniently allows all of the electrical connections from the cells to be at one end of the assembly, which can greatly improve the speed and ease of manufacture, reduce the weight and resistance of connections and improve the reliability of the battery assembly.

In an embodiment, at least a portion of each aperture is arcuate and the bus bars have complementary arcuate portions. Each connection between a bus bar and a second terminal of a cell may be a connection between an arcuate portion of a bus bar and the peripheral region of the cell. Utilising arcuate apertures and bus bar portions may increase the number of connections that can be made to a terminal, and/or decrease the connection density, while also decreasing the connection distance and thus resistance and weight.

In an embodiment, the carrier frame further comprises slots in correspondence with the apertures for receiving and retaining the battery cells. Each slot may comprise features for providing an interference fit between the slots and the battery cells in order to retain the cells in their slots. The quality of the connections formed between the cell terminals and the bus bars has been found to depend significantly on the rigid fixation of the cells. An interference fit may provide suitably rigid fixation. In an embodiment, the features for providing an interference fit comprise a plurality of spokes, for example six spokes.

In an embodiment, the bus bars are attached to the carrier frame by heat staking. The use of heat staking may reduce the mass of the assembly compared to, for instance, metal fasteners which also may tend to loosen during use.

In an embodiment, the bus bars are attached to the carrier frame by heat stakes passing through dowel holes in the bus bars and dowel holes in the carrier frame. The heat stakes may be made from a polymer having a lower melting temperature than the carrier frame.

In an embodiment, the cells and apertures are in one-to-one correspondence. That is, each cell has its own aperture.

In an embodiment, the battery assembly further comprises a cooling plate thermally coupled to the battery cells at their second ends. The second ends of the cells may be structurally and thermally bonded to the cooling plate, for example using an electrically insulating and thermally conductive adhesive. The cooling plate may provide both cell cooling and additional structural rigidity, which may improve the quality of the connections between the bus bars and cell terminals.

According to a second aspect, there is provided a battery module comprising: a first battery assembly according to the first aspect; and a second battery assembly according to the first aspect. The first and second battery assemblies may be coupled to each other such that surfaces of the first and second carrier frames that include the apertures are coplanar. The first and second battery assemblies may be connected in series or parallel.

In an embodiment, the battery module further comprises a printed circuit board (PCB) for measuring voltages of the first and/or second battery assembly. The PCB may be coplanar with and provided between the surfaces of the first and second carrier frames. The PCB may be elongate in a direction perpendicular to the rows of the arrays of the first and second battery assemblies.

According to a third aspect, there is provided a battery module comprising: a first battery assembly according to the first aspect; a second battery assembly according to the first aspect; and a cooling plate having a first side and a second side opposite the first side. The second ends of the cells of the first assembly may be thermally coupled to the first side of the cooling plate and the second ends of the cells of the second assembly may be thermally coupled to the second side of the cooling plate. The first and second battery assemblies may be connected in series or parallel.

The battery modules of the second and third aspects may be combined. That is, a battery module may comprise both battery assemblies with coplanar first ends and battery assemblies having second ends located on opposite sides of a common cooling plate.

According to a fourth aspect, there is provided a battery pack comprising plural battery assemblies according to the first aspect or plural battery modules according to the second or third aspect. The assemblies and modules may be connected in series, connected in parallel or a mixture of the two.

According to a fifth aspect, there is provided an aircraft comprising the battery assembly of the first aspect, the battery module of the second and/or third aspects or the battery pack of the fourth aspect. The aircraft may be an aircraft with a purely electric propulsion system, an aircraft with a hybrid electric propulsion system, or a 'more electric' aircraft with, for example, one or more gas turbine engines and an electrical energy storage system which may be used in the transfer of power from, to and between spools of the engine and/or to power auxiliary systems.

According to a sixth aspect, there is provided a method of fabricating a battery assembly. The method comprises: providing a carrier frame for housing an array of battery cells, the array comprising plural rows and each row comprising plural cells, the carrier frame comprising an array of apertures corresponding to the array of cells; locating battery cells within the array, each battery cell extending between opposed first and second ends and having first and second terminals both located at the first end, the first end of each cell being at least partially exposed by one of the apertures in the carrier frame; attaching bus bars to the carrier frame between rows of the array such that each of the rows is adjacent two bus bars; and for each of the plurality of rows, connecting the first terminal of each cell in the row to one of the two adjacent bus bars and connecting the second terminal of each cell in the row to the other of the two adjacent bus bars. The bus bars and the apertures may be complementarily shaped.

In an embodiment, for each terminal of each cell, connecting the terminal to the adjacent bus bar comprises forming a plurality of wire bonds between the terminal and the bus bar.

In an embodiment, attaching the bus bars to the carrier frame comprises heat staking the bus bars and carrier frame. Heat staking the bus bars and carrier frame may comprise: providing a plurality of heat stakes made of a polymer material having a melting temperature lower than a melting temperature of the carrier frame; inserting the heat stakes into dowel holes in the carrier frame and positioning the bus bars over the carrier frame and heat stakes; and heating the assembly to heat stake the bus bars and carrier frame together.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### Brief Description of the Drawings

Embodiments will now be described by way of example only, with reference to the Figures, in which:
**Figure 1** is a sectional side view of a gas turbine engine;
**Figure 2A** is a schematic illustration of a hybrid electric aircraft propulsion system;
**Figure 2B** is a schematic illustration of a purely electric aircraft propulsion system;
**Figure 3A** is a perspective view of a battery module in accordance with the present disclosure;
**Figure 3B** is a plan view of the battery module of Figure 3A;
**Figure 4** is a plan view of a battery assembly including an array of battery cells and illustrates complementarily shaped apertures and bus bars as well as connections between the bus bars and cell terminals;
**Figure 5A** is a plan view of part of the battery assembly of Figure 4, showing wire bond connections between the bus bars and cell terminals;
**Figure 5B** illustrates wire bond and ribbon bond connections between cell terminals and bus bars;
**Figure 6** illustrates a serpentine PCB sandwiched between adjacent battery assemblies of a battery module;
**Figure 7** is a perspective view of a cylindrical battery cell;
**Figure 8** is a perspective view of part of a battery assembly and shows the attachment of the bus bars to the carrier frame by heat stakes;
**Figure 9A** is a perspective view of a section of an upper frame portion of a carrier frame and illustrates apertures in the carrier frame as well as slot features for providing an interference fit between the cells and the slots;
**Figure 9B** is a perspective view of a lower frame portion of the carrier frame; and
**Figure 10** is a flow chart illustrating a method of fabricating a battery assembly.

### Specific Description

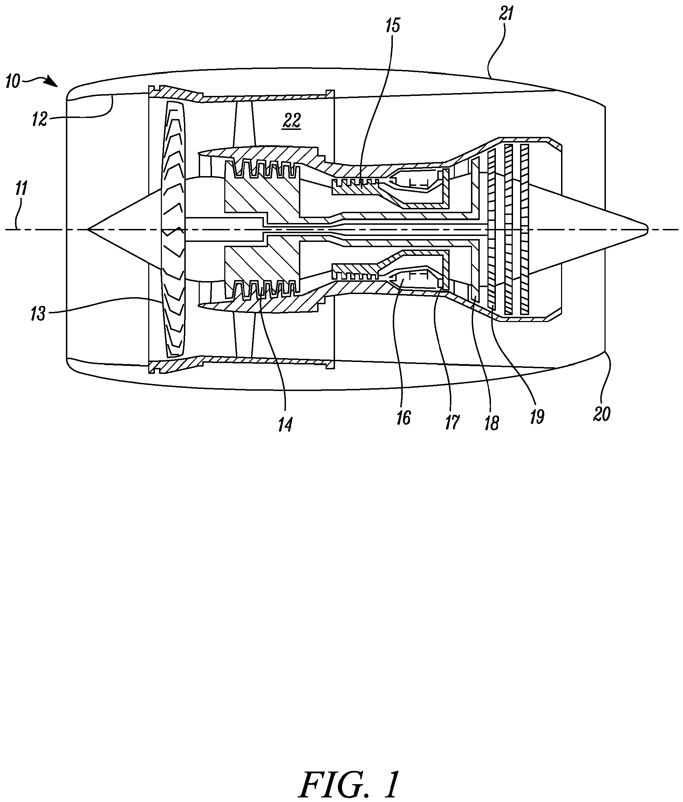

With reference to **Figure 1****,** a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive, the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan. The gas turbine engine may also incorporate or interface with one or more batteries, for example to power ancillary electrical systems and/or to cooperate with one or more electric machines involved in the transfer of mechanical power to and from one or more of the interconnecting shafts.

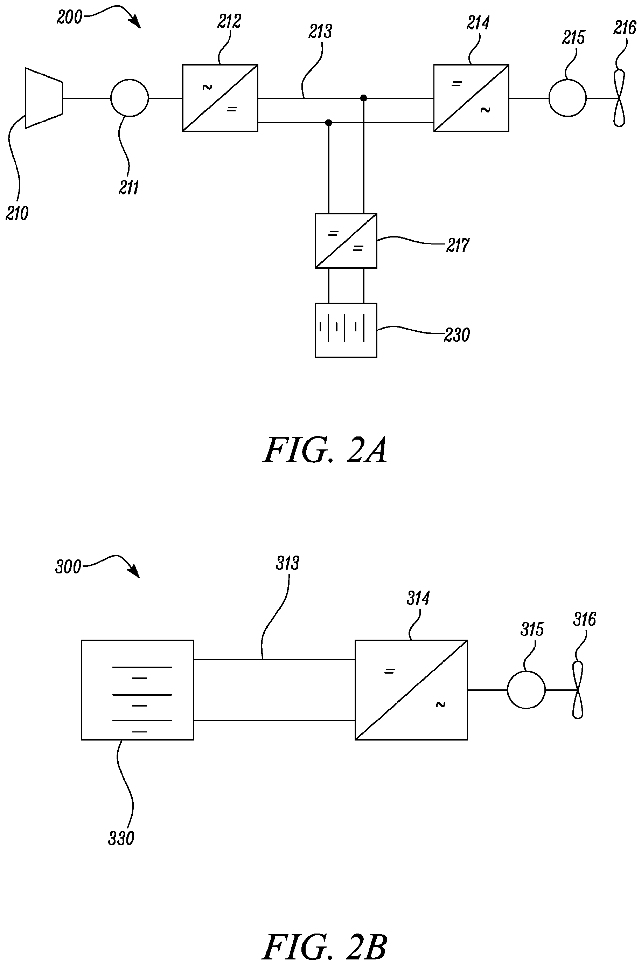

Now referring to **Figure 2A****,** the propulsion system of a hybrid electric aircraft is generally indicated at 200 and incorporates both an engine 210, such as the gas turbine engine 10 described above with reference to Figure 1, and a battery pack 230. Both the engine 210 and the battery pack 230 are used as energy sources to power a motor-driven propeller 216, as well as ancillary electrical systems (not shown). The propulsion system 200 of the hybrid electric aircraft will typically further comprise a generator 211, an AC/DC converter 212, a high voltage DC (HVDC) distribution bus 213, a DC/AC converter 214, a motor 215 that drives the propeller 216, and a DC/DC converter 217.

A shaft of the engine 210 is coupled to and drives the rotation of a shaft of the generator 211 which thereby produces alternating current. The AC/DC converter 212, which faces the generator 211, converts the alternating current into direct current which is fed to various electrical systems via the HVDC distribution bus 213. These electrical systems include the motor 215 that drives the propeller 216. The motor 215 will typically be a synchronous motor that interfaces with the HVDC distribution bus 213 via the DC/AC converter 214.

The battery pack 230, which may be made up of a number of lithium ion battery modules connected in series and/or parallel, is connected to the HVDC distribution bus 213 via the DC/DC converter 217. The DC/DC converter 217 converts between a voltage of the battery pack 230 and a voltage of the HVDC distribution bus 213. In this way, the battery pack 230 can replace or supplement the power provided by the engine 210 (by discharging and thereby feeding the HVDC distribution bus 213) or can be charged using the power provided by the engine 210 (by being fed by the HVDC distribution bus 213).

A battery pack will also appear in the propulsion system of a purely electric aircraft, generally indicated as 300 in **Figure 2B****.** The battery pack 330 feeds a HVDC distribution bus 313, possibly via DC/DC converter (not shown), which delivers power to one or more synchronous motors 315 via a DC/AC converter 314. The one or more motors 315 drive the one or more propellers 316 that propel that aircraft.

A battery pack or module will typically include a large number of battery cells connected together in series and parallel to meet the terminal voltage and energy storage requirements of the application. Aerospace applications will typically make use of high terminal voltages (perhaps of the order of 500V to 3kV), which may advantageously reduce the required size and weight of power distribution connections. Despite this, cabling, bus bars and the like can still contribute significantly to the size and weight of batteries. Furthermore, the large number of cells and the correspondingly large number of electrical connections can significantly add to the manufacturing complexity. The present disclosure provides a battery assembly, and battery modules and packs that may be formed from one or more of the assemblies, which may provide improvements in terms of size, weight and manufacturing complexity.

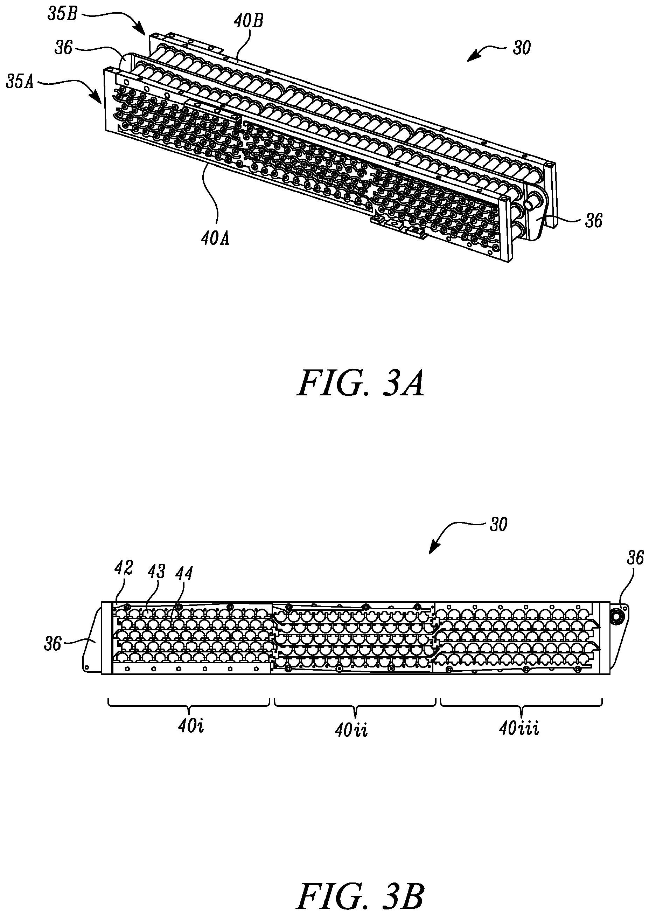

**Figures 3A and 3B** illustrate an exemplary battery module 30 constructed in accordance with the principles described herein. The battery module 30 is formed from two substantially similar half-modules 35A, 35B provided on opposite sides of a shared central cooling plate 36. Each of the two half-modules 35A, 35B is formed from three substantially similar battery assemblies, labelled 40i, 40ii, 40iii in the plan view of Figure 3B in which only one of the two half-modules 35A, 35B is visible. Thus, in total, the battery module 30 is formed from six similar battery assemblies 40, which in this example are connected together in series. One such battery assembly 40 will be described in more detail below.

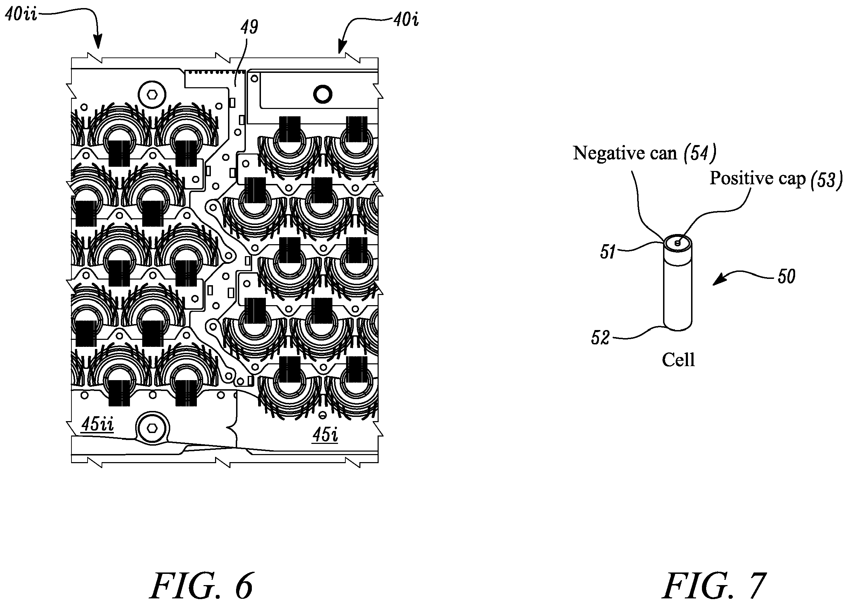

Each battery assembly 40 described herein includes a number of series- and parallel- connected battery cells. Briefly turning to **Figure 7****,** one such battery cell 50 is illustrated. The cell 50 extends between a first (top) end 51, a second (bottom) end 52 and includes a first terminal 53 and a second terminal 54. In this particular example the first terminal 53 is the positive terminal and the second terminal 54 is the negative terminal. Both the first and second terminals 53, 54 are located at the first end 51 of the cell 50 such that, conveniently, connections to and from the cell's terminals 53, 54 can be made from the same, first, end 51 of the cell 50.

It will be appreciated that Figure 7 illustrates a cylindrical cell, for instance a conventional 4.2V cylindrical cell, with the first (positive) terminal 53 formed at a central region of the cell (the cell cap) and the second (negative) terminal 54 formed at a peripheral region of the cell (the cell can). However, this is not essential and it is envisaged that other cells form factors could be used in accordance with the present disclosure. For example: pouch cells, prismatic cells, button cells and other cell types could be used. In some embodiments the cells are lithium-ion cells, but other cell chemistries known in the art could equally be used.

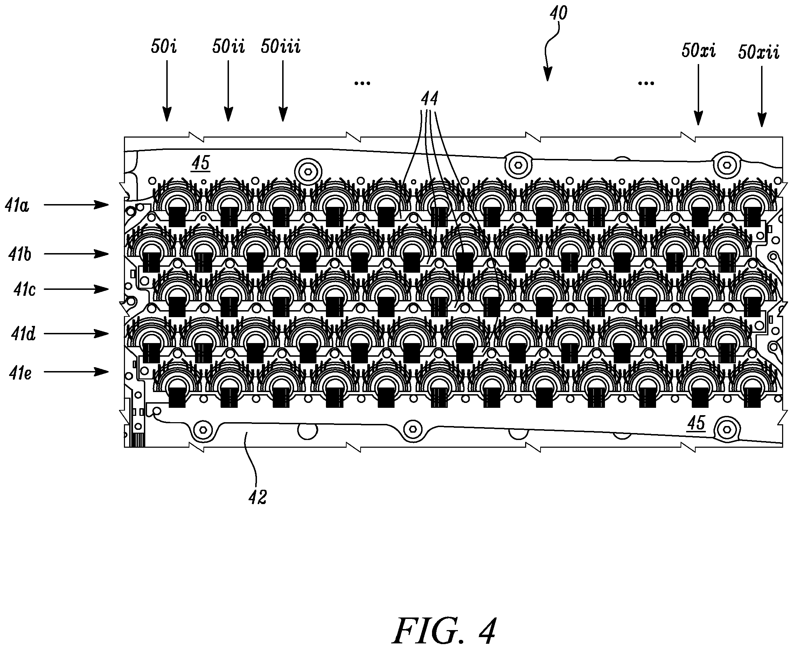

Turning to **Figure 4****,** which is a plan view of one of the battery assemblies 40 of Figures 3A-3B and includes some additional detail, it can be seen that the battery 40 assembly includes an array of battery cells 50. The array of cells includes a plurality of rows. In this non-limiting example there are five rows labelled 41a, 41b, 41c, 41d, 41e. Each of the rows 41a-41e includes a plurality of cells. In this non-limiting example there are twelve cells labelled 50i, 50ii, 50iii, ..., 50xi, 50xii per row. Thus, in total, the battery assembly 40 of Figure 4 includes sixty battery cells arranged in a 5 x 12 array.

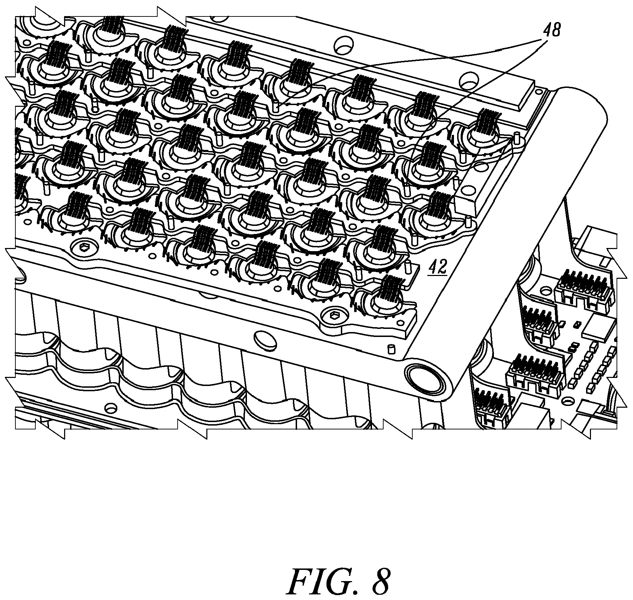

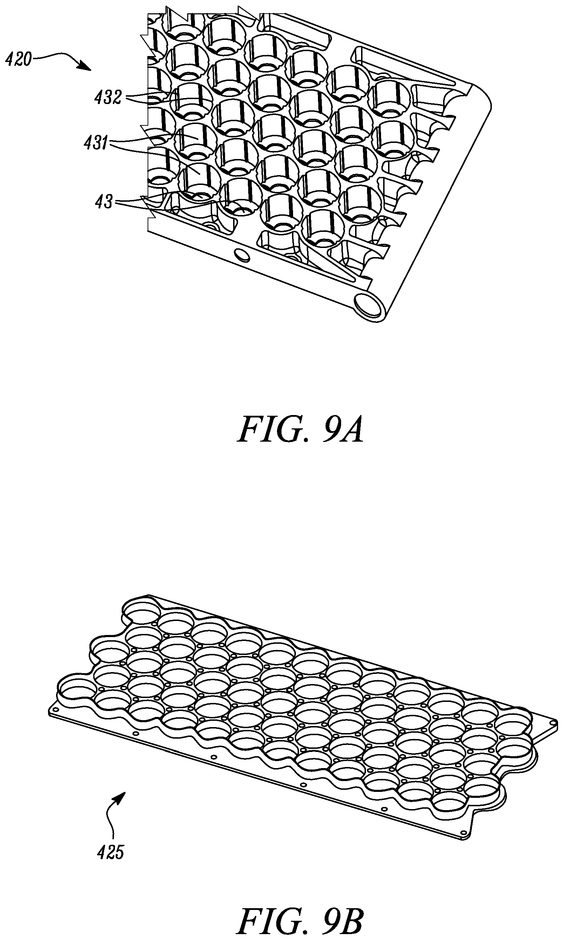

The battery cells 50 are housed within a carrier frame 42, an outward facing upper surface of which is visible in the plan view of Figure 4. The carrier frame 42 generally provides structure and rigidity to the assembly 40 and an example carrier frame 42 will be described in more detail with reference to Figures 8 and 9A-9B. The cells 50 are housed within the carrier frame 42 such that each cell 50 in the assembly 40 is oriented in the same way, with the first end 51 (i.e. the end of the cell 50 that includes both the first and second terminals 53, 54) of each cell 50 adjacent the upper surface of the carrier frame 42.

The upper surface of the carrier frame 42 includes an array of apertures 43 in correspondence with the array of cells 50. By "correspondence", it is meant that there is at least one aperture 43 per cell 50 and the locations of the apertures 43 substantially align with the locations of the cells 50 in the array. The apertures 43 are located, sized and shaped such that the first end 51 of each of the cells 50 is at least partially exposed. The apertures 43 may be of any suitable size and shape, but will generally at least partially expose the first and second cell terminals 53, 54 to facilitate electrical connection. In Figure 4, portions of the top ends 51 of each cell 50 are visible as they are exposed by the apertures 43. In Figure 3B, the assemblies 40i, 40ii, 40iii are illustrated without the cells in place such that the empty apertures 43 are visible.

Current collectors in the form of bus bars 44, which are elongate in a direction parallel to the rows 41a-41e, are secured to the upper surface of the carrier frame 42 between adjacent rows of cells 50. Thus, each of these bus bars 44 is adjacent two rows of cells. Equivalently, each row 41a-41e of cells is adjacent two bus bars. Two elongate outer bus bars 45 are also secured to the frame adjacent the outer rows 41a, 41e so that the outermost rows 41a, 41e of cells are also adjacent two bus bars.

The bus bars 44, 45 are formed from an electrically conductive material. In one example, the bus bars 44, 45 are copper, possibly plated in nickel. In another example, the bus bars 44, 45 are aluminium, which though less conductive than copper is less dense. An aluminium bus bar can thus possess equivalent current carrying capability at a lower bus bar mass and, optionally, greater bus bar exposed surface area. A greater exposed area will generally increase heat transfer and thus bus bar cooling. In one specific example, the bus bars 44 provided between the rows are formed from aluminium whereas the outer bus bars 45 are formed from nickel-plated copper.

The cells 50 of the array are connected together in a mixture of series and parallel. Various connection topologies are possible, but in this example the cells of the same row of the assembly 40 are connected in parallel and adjacent rows are connected in series. To achieve this, the first terminal 53 of each cell 50 of a given row is connected to one of the two adjacent bus bars. The second terminal 54 of each cell of said given row is then connected to the other of the two adjacent bus bars.

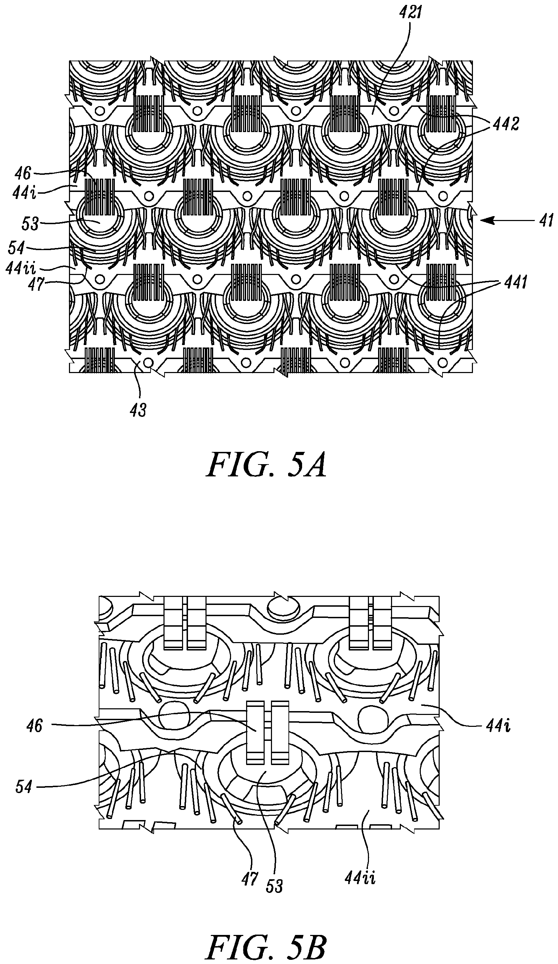

Such a connection topology is most clearly illustrated in **Figure 5A****.** For one of the rows of cells, labelled 41, the connections 46, 47 between one of the cells and its two adjacent bus bars 44i, 44ii are labelled. The first terminal 53 (in this example the centrally located positive terminal) is connected to the first bus bar 44i by connections 46. The second terminal 54 (in this example the peripherally located negative terminal) is then connected to the second bus bar 44ii by connections 47. All of the cells in this row 41 are connected in the same way, and the cells of the other rows will be connected in the same way albeit to a different pair of bus bars. It will be understood that the connection direction is the same for each row of the assembly 40. In this specific example this means that the first terminal 53 is always connected to the bus bar that is above the cell (in the plane of Figure 5A) and the second terminal is always connected to the bus bar that is below the cell (in the plane of Figure 5A).

Figure 5A illustrates the use of wire bonds 46, 47 to connect the cell terminals 53, 54 to the bus bars 44i, 44ii. Specifically, a plurality (in this example eight) wire bonds 46 connect each positive terminal 53 to the associated bus bar 44i and a plurality (in this example eight) wire bonds 47 connect each negative terminal 54 to the associated bus bar 44ii. Other types of connection between the terminals 53, 54 and bus bars 44 may be used, for example ribbon bonds. In an embodiment illustrated in **Figure 5B****,** a mixture of ribbon bonds 46 and wire bonds 47 are used.

Of particular note is the shape of the bus bars 44. As can be seen best in Figure 5A, the bus bars 44 are not straight, linear bars. Rather, portions of the bus bars 44 are shaped to complement the shapes of portions of the apertures 43 to which they are adjacent. For instance, in Figure 5A, in order to expose at least part of the peripheral region of the cell 50 that includes the second terminal 54, each of the apertures 43 has an arcuate portion. The edge 441 of the bus bar 44ii adjacent the arcuate portions of the apertures 43 of row 41 is shaped to complement the arcuate portions of the apertures 43 of the row 41. Said edge 441 of the bus bar 44ii thus includes, for each aperture 43, an arcuate portion 441 that complements the arcuate portion of the aperture 43. The plurality of connections 47 (e.g. wire bond connections) between the edge 441 of the bus bar 44ii and second terminals of the cells of the row 41 are then arranged around the arcuate perimeter of the shaped portions 441 of the edge 441. Other aperture shapes, and thus other complementary bus bar shapes, could also be used.

By providing complementarily shaped bus bars 44 and apertures 43, distances between the edges of bus bars 44 and the terminals 53, 54 to which they are to be connected are reduced. This may allow for shorter connections 46, 47. Not only does this reduce the resistance of the connections 46, 47, it may greatly improve the ease of with which the connections can be formed and reduce the likelihood of their failure. Furthermore, having cooperatively shaped, non-linear bus bars 44 increases the available length of the edge of the bus bar 44 from which connections to the terminals 54 are made. This means that the number of connections 47 per terminal 54 can be increased without necessarily increasing the density of the connections. Overall, this allows for a reduction in resistance and an increase in redundancy without significantly affecting the ease of manufacture or quality of the connections.

Various bus bar arrangements shapes are consistent with the present disclosure. For example:
- One edge 441 of a bus bar may be shaped to complement the shape of adjacent apertures, whereas an opposite edge 442 of the bus bar may not be shaped to complement the aperture. This is the case in Figure 5A, where the edge 442 to which the first terminals 53 connect is essentially linear except for spaced protrusions 443 that are used to accommodate fixing points for securing the bus bars 44 to the carrier frame 42.
- Both edges of the bus bar may be shaped to complement the shape of adjacent apertures. For example, in Figure 5A, the edge 442 of the bus bar 44 could be shaped so as to cover the region of the carrier frame labelled 421 and thereby complement the portion of the aperture 43 that covers the peripheral second terminal 54 of the cell but exposes the central first terminal 53 of the cell.
- One or both of the outer bus bars 45 may also be shaped to complement the adjacent apertures 43. For example, referring to Figure 4, one of the outer bus bars 45 is shown to have a shape that complements the arcuate shape of the apertures 43 of the adjacent row 41a in a similar manner to the intermediate bus bars 44.

Also of note is that the shaped bus bars 44 terminate at the edges of the apertures 43, and in particular do not overhang the apertures 43. This ensures that the cells 50 have an unobstructed aperture 43 through which they can vent (e.g. flames or thermal products) in case of a fault or thermal event. Providing the cells with space to vent may reduce the risk of rupture of the cell side walls, which could cause additional damage and spread a thermal event. Furthermore, while overhanging bus bars could be used to further reduce the distance between the bus bars and cell terminals, a venting cell could damage an overhanging bus bar portion, and an overhanging portion could provide a path through which thermal events could spread.

Now turning to **Figure 6****,** this illustrates a multi-layer printed circuit board (PCB) 49 that may be used, for example, to measure voltages of the bus bars 44. Such measurements may be useful for health monitoring, for example to identify the location of faulty or damaged cells. It can be seen that the PCB 49, which in this embodiment has a serpentine profile, is provided between two adjacent battery assemblies 40i, 40ii, for example two assemblies 40i, 40ii of one of the two half-modules of Figures 3A-3B. In this way the PCB 49 can be connected to, by wire bonds or the like, the rows 41 of both assemblies 40i, 40ii while taking up a relatively small space on the carrier frame 42. Furthermore, if a PCB 39 is provided between each pair of assemblies 40i, 40ii and at the edges of the outermost assemblies (e.g. 40i, 40iii in Figure 3B) then each assembly 40 can be served by two PCBs 39 to provide redundancy.

It can also be seen from Figure 6 that one of the outer bus bars 45i of the first battery assembly 40i is electrically connected to one of the outer bus bars 45ii of the second battery assembly 40ii. In this way, the two battery assemblies 40i, 40ii are connected in series. For this reason, it can be seen that in the second battery assembly 40ii, the directions of the connections between the cell terminals 53, 54 and the bus bars 44, 45 are opposite to the directions of the connections in the first battery assembly 40i. That is, in the plan view of Figure 6, in the first assembly 40i the first terminal 53 of each cell is connected to a bus bar above the cell, whereas in the second assembly 40ii the first terminals 53 of each cell is connected to a bus bar below the cell.

The bus bars 44, 45 and/or PCBs 49 may be attached to the carrier frame 42 by one or a combination of double sided adhesive, heat stakes and fasteners. Referring to **Figure 8****,** heat stakes 48 can be seen passing through fixing points in the bus bars 44, 45 and into dowel holes in the carrier frame 42. In one embodiment, plastic heat stakes 48 formed from a polymer material having a lower melting point than the material from which the carrier frame 42 is made may be used. The use of heat stakes 48, particularly for securing the bus bars 44 between adjacent rows of cells, may be preferred as they are typically lighter and less likely to become loose during use than fasteners (e.g. metal screws).

It will be appreciated that the carrier frame 42 could be implemented in any number of ways. In one example, illustrated in **Figures 9A and 9B****,** the carrier frame 42 includes upper and lower frame portions 420, 425. The upper and lower portions 420, 425 may be formed from the same or different suitable materials, preferably an electrically and thermally resistant material such as a polycarbonate.

The upper frame portion 420 includes, in one surface, the apertures 43 that expose the first ends 51 of the cells 50. In correspondence with each aperture 43 is a slot 431 for receiving and locating the cell 50. It has been found that the quality of the connections 46, 47 formed between the cell terminals 53, 54 and the bus bars 44, 45 depends on the rigid fixation of the cells. To this end, the slots 431 in the upper frame 420 may be provided with features 432 for providing an interference fit between the cells 50 and the upper frame 43 following their insertion. In the embodiment shown, the features 432 include six radial spokes 432 arranged around the slot 431.

The lower frame portion 425 includes corresponding slots for receiving and locating the second ends 52 of the cells 50. The slots in the lower frame portion 425 terminate in apertures so as to expose the cells 50 at their second ends 52. By exposing the cells 50 at their second ends 52, the cells can be directly thermally coupled to a cooling system, for example a liquid cooled plate such as the one illustrated in Figures 3A and 3B, to improve cooling of the cells. For instance, referring to Figure 3A, the second ends 52 of cells of two half-modules 35A, 35B may be thermally and structurally bonded, using an electrically insulating and thermally conductive adhesive, to opposed sides of a single cooling plate 36 through which a cooling fluid may be pumped. It will be appreciated that such an arrangement could be implemented without the lower frame portion 425.

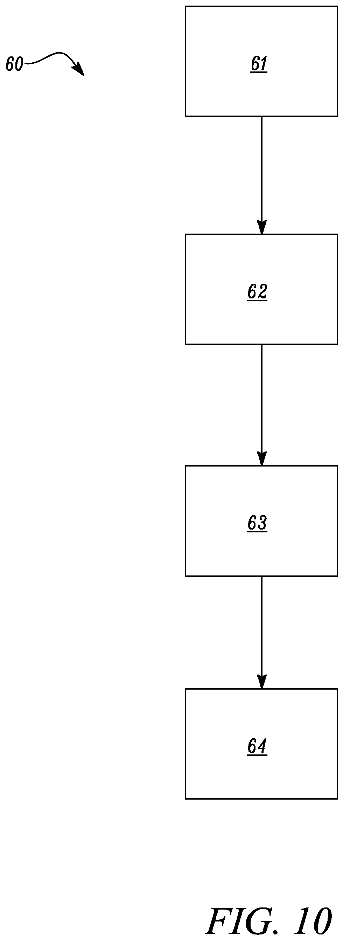

**Figure 10** is a flow chart illustrating a method 60 of fabricating a battery assembly 40 in accordance with the present disclosure.

At 61, a carrier frame 42 for housing an array of battery cells 50 is provided. The array includes plural rows 41a-41e of cells and each row includes plural cells 50. The carrier frame 42 is suitably configured according to the particulars of the array, for example the selected cell type (e.g. cylindrical), the number of rows and columns, and the cell spacing. The carrier frame 42 includes an array of apertures 43 in correspondence with the array of cells 50, and the apertures may be defined in, for example, and outward facing surface of the carrier frame 42.

In some embodiments, the carrier frame 42 includes slots 431 for retaining and locating the cells in the desired positions. The slots 431 may include surface features 432, such as protruding spokes, for providing an interference fit between the slots and cells so as to rigidly fix the cells in place. The slots 431 and apertures 43 may be provided in a first frame portion 420 of the carrier frame 42. The carrier frame 42 may further comprise a separate second frame portion 425.

At 62, a plurality of battery cells 50 are obtained and located within the carrier frame 42. Each battery cell 50 extends between opposed first and second ends 51, 52 and each cell is oriented within the carrier fame 42 in the same way such that the first end 51 of each cell is at least partially exposed by a corresponding aperture 43. The cells may be of any type, but are configured so that the positive and negative terminals 53, 54 of the cells are accessible from the same first end 51 of the cell. Thus, the first end 51, including the two terminals 53, 54, is at least partially exposed by the apertures 43, when the cells are housed within the carrier frame.

At 63, bus bars 44 are attached to the carrier frame 42 between rows 41a-41e of the array. One or more outer bus bars 45 may also be attached to the carrier frame adjacent outer rows 41a, 41e of the array. As such, each row of cells 41a-41e is adjacent two bus bars. Portions 441 of the bus bars 44 and the apertures 43 are complementarily shaped.

The bus bars 44, 45 may be attached to the carrier frame in any suitable way including adhesive, heat staking, fasteners or any combination of these. In one embodiment, polymer-based heat stakes 48 are inserted through dowel holes in the bus bars 44, 45 and the carrier frame 42 and then heated to secure the components together.

At 64, for each of the plurality of rows 41a-41e of cells 50, the first terminal 53 of each cell in the row 41 is connected to one of the two adjacent bus bars 44i. The second terminal 44i of each cell in the row 41 is connected to the other of the two adjacent bus bars 44ii.

Due to the complementary shape of portions 441 of the bus bars 44, at least some of the connection distances between shaped bus bars 44 and the cell terminals 53, 54 are reduced. In some embodiments, connections 47 are arranged around a perimeter of an arcuate region of a bus bar 44 and a terminal 54 located in a peripheral region of a cell 50.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A battery assembly (40) comprising:
an array of battery cells (50) comprising plural rows (41a-41e), each row comprising plural cells (50i-50xii), each cell (50) extending between opposed first and second ends (51, 52) and having first and second terminals (53, 54) both at the first end (51);
a carrier frame (42) housing the array of cells (50) and comprising an array of apertures (43) corresponding to the array of cells (50), the first end (51) of each cell (50) at least partially exposed by one of the apertures (43); and
bus bars (44) attached to the carrier frame (42) between adjacent rows of the array such that each of the rows (41a-41e) is adjacent two bus bars (44i, 44ii),
wherein:
for each of the plurality of rows (41a-4e), the first terminal (53) of each cell (50) in the row is connected to one of the two adjacent bus bars (44i) and the second terminal (54) of each cell (50) in the row is connected to the other of the two adjacent bus bars (44ii); and
portions (441) of the bus bars (44) and the apertures (43) are complementarily shaped.

2. The battery assembly (40) of claim 1, in which the bus bars (44) are shaped so as to terminate at edges of the apertures (43), whereby the bus bars (44) do not obstruct the exposed first ends (51) of the battery cells (50).

3. The battery assembly (40) of claim 1 or claim 2, in which the battery cells (50) are configured to vent from their exposed first ends (51), through the apertures (43).

4. The battery assembly (40) of any one of the preceding claims, in which the complementarily shaped bus bars (44) and apertures (43) have non-linear complementary shapes.

5. The battery assembly (40) of any one of the preceding claims, in which each of the bus bars (44) that is provided between adjacent rows of cells (50) has a first edge (441) from which connections to the first terminals (53) of the cells (50) of one of the two adjacent rows are made and a second edge (442) from which connections to the second terminals (54) of the cells (50) of the other of the two adjacent rows are made, the first and second edges (441, 442) having different profiles.

6. The battery assembly (40) of any one of the preceding claims, in which the first terminal (53) of each cell (50) is connected to its adjacent bus bar (44i) by a plurality of connections (46) and the second terminal (54) of each cell (50) is connected to its adjacent bus (44ii) bar by a plurality of connections (47).

7. The battery assembly (40) of any one of the preceding claims, in which each connection between a bus bar (44i) and a first terminal (53) of a cell (50) is a connection to a central region of the cell, and each connection between a bus bar (44ii) and a second terminal (54) of a cell is a connection to a peripheral region of the cell (50).

8. The battery assembly (40) of claim 7, in which at least a portion of each aperture (43) is arcuate and the bus bars (44) have complementary arcuate portions (441), and each connection (47) between a bus bar (44ii) and a second terminal (54) of a cell is a connection between an arcuate portion (441) of a bus bar (44ii) and the peripheral region of the cell (50).

9. The battery assembly (40) of any one of the preceding claims, in which the carrier frame (42) further comprises slots (426) in correspondence with the apertures (43) for receiving and locating the battery cells (50), each slot (426) comprising features (432) for providing an interference fit between the slots (426) and the battery cells (50) in order to retain the cells in their slots.

10. A battery module (30) comprising:
a first battery assembly (40A) as claimed in any one of claims 1 to 9;
a second battery assembly (40B) as claimed in any one of claims 1 to 9;
a cooling plate (36) having a first side (361) and a second side (362) opposite the first side, wherein the second ends (52) of the cells (50) of the first assembly (40A) are thermally coupled to the first side (361) of the cooling plate (36) and the second ends (52) of the cells (50) of the second assembly (40B) are thermally coupled to the second side (362) of the cooling plate (36).

11. A battery module (30) comprising:
a first battery assembly (40i) as claimed in any one of claims 1 to 9; and
a second battery assembly (40ii) as claimed in any one of claims 1 to 9, the first and second battery assemblies (40i, 40ii) being coupled to each other such that surfaces of the first and second carrier frames (42) that include the apertures (43) are coplanar.

12. The battery module (30) of claim 11, further comprising a printed circuit board, PCB (49), for measuring voltages of the first (40i) and/or second (40ii) battery assembly, the PCB (49) being coplanar with and provided between the surfaces of the first and second carrier frames (40i, 40ii), the PCB (49) being elongate in a direction perpendicular to the rows (41a-41e) of the arrays of the first and second battery assemblies (40i, 40ii).

13. An aircraft comprising the battery assembly (40) of any one of claims 1 to 9 or the battery module (30) of any one of claims 10 to 12.

14. A method (60) of fabricating a battery assembly (40), the method comprising:
providing (61) a carrier frame (42) for housing an array of battery cells (50) comprising plural rows (41a-41e), each row comprising plural cells (50i-50xii), the carrier frame (42) comprising an array of apertures (43) corresponding to the array of cells (50);
locating (62) battery cells (50) within the array, each battery cell (50) extending between opposed first and second ends (51, 52) and having first and second terminals (53, 54) both located at the first end (51), the first end (51) of each cell being at least partially exposed by one of the apertures (43) in the carrier frame (42);
attaching (63) bus bars (44) to the carrier frame (42) between rows (41a-41e) of the array such that each of the rows is adjacent two bus bars (44i, 44ii); and
for each of the plurality of rows (41a-41e), connecting (64) the first terminal (53) of each cell in the row to one of the two adjacent bus bars (44i) and connecting the second terminal (44i) of each cell in the row to the other of the two adjacent bus bars (44ii),
wherein portions (441) of the bus bars (44) and the apertures (43) are complementarily shaped.

15. The method (60) of claim 14, wherein attaching (63) the bus bars (44) to the carrier frame (42) comprises:
providing a plurality of heat stakes (48) made of a polymer material having a melting temperature lower than a melting temperature of the carrier frame (42);
inserting the heat stakes (48) into dowel holes in the carrier frame (42) and positioning the bus bars over the carrier frame (42) and heat stakes (48); and
heating the assembly (40) to heat stake the bus bars (44) and carrier frame (42) together.
